# EUROPÄISCHE PATENTSCHRIFT

(11) **EP 1 449 083 B1**
(45) Veröffentlichungstag und Bekanntmachung des Hinweises auf die Patenterteilung: **23.05.2007**
(21) Anmeldenummer: 02772041.6
(22) Anmeldetag: 03.09.2002
(51) Int. Cl.: G06F 11/26

(54) **VERFAHREN ZUM DEBUGGEN REKONFIGURIERBARER ARCHITEKTUREN**
METHOD FOR DEBUGGING RECONFIGURABLE ARCHITECTURES
PROCEDE DE DEBOGAGE D'ARCHITECTURES RECONFIGURABLES

(30) Priorität: 03.09.2001 DE 10142904; 03.09.2001 DE 10142894; 11.09.2001 DE 10144733; 17.09.2001 DE 10145795; 28.09.2001 US 967497; 05.11.2001 DE 10154259; 19.01.2002 DE 10202044; 20.01.2002 DE 10202175; 18.02.2002 DE 10206856; 21.02.2002 DE 10207226; 27.08.2002 DE 10240022
(43) Veröffentlichungstag der Anmeldung: 25.08.2004
(73) Patentinhaber: PACT XPP Technologies AG, 80939 München (DE)
(72) Erfinder: VORBACH, Martin, 80689 München (DE)
(74) Vertreter: Pietruk, Claus Peter
(86) Internationale Anmeldenummer: PCT/DE2002/003278
(87) Internationale Veröffentlichungsnummer: WO 2003/023616

(56) Entgegenhaltungen:
- US-A- 5 425 036
- US-A- 5 680 583
- US-A- 5 754 827

## Beschreibung

Die vorliegende Erfindung befaßt sich mit Verfahren für das Debuggen von Programmen auf rekonfigurierbaren Architekturen. Unter einer rekonfigurierbaren Architektur werden u. a. Bausteine (VPU) mit konfigurierbarer Funktion und/oder Vernetzung verstanden, insbesondere integrierte Bausteine mit einer Mehrzahl von ein- oder mehrdimensional angeordneten arithmetischen und/oder logischen und/oder analogen und/oder speichernden und/oder vernetzenden Baugruppen (im Folgenden PAEs genannt) und/oder kommunikativen/peripheren Baugruppen (IO), die direkt oder durch ein oder mehrere Bussystem(e) miteinander verbunden sind. PAEs sind in beliebiger Ausgestaltung, Mischung und Hierarchie angeordnet. Diese Anordnung wird im weiteren PAE-Array oder PA genannt.

Zur Gattung dieser Bausteine zählen systolische Arrays, neuronale Netze, Mehrprozessor-Systeme, Prozessoren mit mehreren Rechenwerken und/oder logischen Zellen, Vernetzungs- und Netzwerkbausteine wie z.B. Crossbar-Schalter, ebenso wie bekannte Bausteine der Gattung FPGA, DPGA, XPUTER, etc. Hingewiesen wird insbesondere in diesem Zusammenhang auf die folgenden Schutzrechte desselben Anmelders: P 44 16 881.0-53, DE 197 81 412.3, DE 197 81 483.2, DE 196 54 846.2-53, DE 196 54 593.5-53, DE 197 04 044.6-53, DE 198 80 129.7, DE 198 61 088.2-53, DE 199 80 312.9, PCT/DE 00/01869, DE 100 36 627.9-33, DE 100 28 397.7, DE 101 10 530.4, DE 101 11 014.6, PCT/EP 00/10516, EP 01 102 674.7, DE 102 06 856.9, 60/317,876, DE 102 02 044.2, DE 101 29 237.6-53, DE 101 39 170.6.

Weiterhin soll angemerkt werden, daß die zu beschreibenden Verfahren auch auf Gruppen von mehreren Bausteinen angewendet werden können. Dennoch wird nachfolgend auf VPU und/oder auf "Bausteine" Bezug genommen. Diese Bauteile und deren Betrieb sind noch zu verbessern.

Programme auf rekonfigurierbaren Architekturen haben typisch einen normalen Programmablauf, bei welchem zunächst eine Konfiguration terminiert wird und dann eine erforderliche andere Konfiguration geladen wird. Es liegt also bei Programmen eine Reihe sukzessiv aufeinander folgend abzuarbeitender Konfigurationen vor. Wie bei anderen Prozessoren und dergleichen müssen auch Programme für rekonfigurierbare Architekturen gegebenenfalls einem Debugging-Prozess unterworfen werden.

Es ist bekannt, FPGAs bei der Emulation von ASICs und dergleichen zu verwenden, indem eine die ASIC-Funktionalität beschreibende Netzliste auf den FPGA aufgespielt wird und dann das Verhalten des emulierten ASICs untersucht wird. Eine Fehlersuche in solchen Systemen wird beispielsweise beschrieben in US-PS 5,680,583, US-PS 5,425,036 und US-PS 5,754,827. Bei der Emulation von ASICs auf FPGAs ergibt sich jedoch regelmä-ßig ein anderes Timing-Verhalten der später tatsächlich zu bauenden Elemente im Vergleich zu den Emulatormodellen. Die bekannten Anordnungen sind also allenfalls geeignet, die logische Korrektheit einer einzelnen Netzliste zu erkennen, nicht jedoch zu untersuchen, ob ein späteres Echtzeitverhalten einer Anordnung korrekt ist oder nicht.

Es ist wünschenswert, ein Verfahren zum Debuggen von Programmen zu haben, das effektiv und schnell ein Debugging erlaubt.

Die Aufgabe der vorliegenden Erfindung besteht darin, oben genannte Probleme zu überwinden.

Die Lösung der Aufgabe wird durch ein Verfahren gemäß Anspruch 1 gelöst. Bevorzugte Ausführungsformen befinden sich in den Unteransprüchen.

### 1. Erfindungsgemäßes Verfahren

Es werden nachfolgend mehrere Verfahren und Hardwareimplementierungen vorgestellt, die ein effizientes Debuggen von VPU-Systemen ermöglichen.

Das Debuggen erfolgt in einer bevorzugten Variante entweder durch die Verwendung eines entsprechend an eine VPU oder den Baustein angeschlossenen Microcontrollers oder durch eine Ladelogik nach den Patenten P 44 16 881.0-53, DE 196 51 075.9-53, DE 196 54 846.2-53, DE 196 54 593.5-53, DE 197 57 200.6-33, DE 198 07 872.2, DE 101 39 170.6, DE 199 26 538.0, DE 100 28 397.7. Wie ersichtlich sein wird, sind aber auch andere Hardware-Varianten verwendbar.

Folgende grundlegende Verfahren sollen alternativ und/oder gemeinsam dabei angewendet werden:

### 1.1 Erkennen einer Debug-Bedingung

### 1.1.1 Bedingung

Durch den Programmierer wird beispielsweise innerhalb des Debug-Tools eine oder mehrere Bedingungen festgelegt, die das Debugging starten (vgl Breakpoint nach dem Stand der Technik). Das Auftreten der Bedingungen wird zur Laufzeit in der VPU und/oder einem beliebigen mit der VPU datenaustauschenden Gerät festgestellt. Dies geschieht beispielsweise durch das Auftreten von bestimmten Datenwerten bei bestimmten Variablen und/oder bestimmten Triggerwerten bei bestimmten PAEs.

### 1.1.2 Vorbedingung

Im Optimalfall kann eine bestimmte Bedingung gemäß o.g. Definition bereits mehrere Takte vor dem Eintreffen der Debug-Bedingung durch den Programmierer festgelegt werden. Dadurch werden bestimmte Latenz-Probleme, die im folgenden diskutiert werden, von vornherein ausgeschlossen.

Es sollen im folgenden zwei grundlegende Arten des Debuggings für VPus diskutiert werden, wobei die jeweils bevorzugt anzuwendende Methode von der Wahl des Compilers abhängt:
Für Compiler, die Code auf Basis von instantiierten Modulen einer Hardwarebeschreibungssprache (oder ähnlichen Sprache) generieren, kann sich besonders die im folgenden beschriebene Methode A eignen.
Für Compiler ähnlich DE 101 39 170.6 und Zusatzanmeldungen, die komplexe Instruktionen erzeugen und nach einem VLIW-ähnlichen Verfahren generieren, eignet sich besonders die im folgenden beschriebene Methode B. Grundsätzlich ist für den
Betrieb einer VPU oder eines entsprechenden Bausteins als Prozessor oder Coprozessor Methode B die bevorzugt anzuwendende.

Es wurde erkannt, dass insbesondere die Verwendung beider Methoden A und B gemeinsam zu den besten und transparentesten Debuggingergebnissen führt. Insbesondere kann je nach Tiefe des zu debuggenden Fehlers zunächst unter Zuhilfenahme der schnellen Debuggingmethode B debuggt werden und nach hinreichende Lokalisierung des Fehlers sodann per Methode A die Details in der "Tiefe" analysiert werden.

### 2. Methode A

### 2.1 Grundprinzip

Nach dem Auftreten einer (Vor) Bedingung wird die VPU angehalten. Danach werden die relevanten Debug-Informationen aus den PAEs an das Debug-Programm übertragen. Die relevanten Debug-Informationen wurden zuvor durch den Programmierer innerhalb des Debug-Programmes festgelegt. Nach Auslesen aller relevanter Debug-Inforlnationen wird der nächste Takt ausgeführt und erneut die relevanten Debug-Informationen ausgelesen. Dies wiederholt sich solange, bis der Programmierer den Debug-Vorgang abbricht. Anstelle des Anhaltens der VPU sind eventuell andere Verfahren denkbar. So können für eine gegebene Abfolge von Takten wiederholt Daten zum Auslesen bereitgestellt werden, sofern dies schnell genug möglich ist.

### 2.2 Unterstützung durch die Hardware

### 2.2.1 Auslesen der Register

Wesentlich für die Funktionsweise des Debuggers ist die Möglichkeit, durch eine übergeordnete Einheit (im folgenden DebugProzessor (DB) genannt), also beispielsweise eine CT oder Ladelogik, einen anderen extern angeschlossenen (Host)Prozessor oder einen reservierten Arraybereich, die internen Datenregister und/oder Statusregister und/oder Zustandsregister und ggf. je nach Implementierung weitere relevante Register und/oder Signale aus den PAEs und/oder dem Netzwerk zurückzulesen bzw. dies nur für ausgewählte Register bzw. Signale zu tun (zusammengefaßt im folgenden als Debuginformation bezeichnet). Eine derartige Möglichkeit ist z. B. mit der in der PCT/DE 98/00334 geschaffenen Verbindung zwischen der Ladelogik und dem Datenbus einer PAE (PCT/DE 98/00334 0403, Fig.4) realisierbar.

Es soll ausdrücklich angemerkt sein, daß auch serielle Verfahren zum Auslesen der Register verwendet werden können. Beispielsweise kann JTAG gewählt werden und der DB über dieses Verfahren ggf. auch als externes seperates und evtl. auch marktübliches Gerät (z. B . Firma Hitex, Karlsruhe) angeschlossen sein.

Da bevorzugt auf sämtliche Register, oder zumindest eine erheblich Anzahl derer, durch den Debugger schreibend und/oder lesend zugegriffen werden kann, kann optional und bevorzugt ein wesentlicher Teil der (seriellen) Verkettung der Register zu Testzwecken (Scan-Chain) für die Produktionstests des Chips entfallen. Die Scan-Chain wird normalerweise dafür verwendet, um alle Register innerhalb eines Chips während der Produktionstests mit Testdaten vorladen zu können und/oder die Inhalte der Register zu Testzwecken wieder zurückzulesen. Das Vorladen und/oder Zurücklesen geschieht dabei typischerweise durch Testsysteme (z.B. SZ Testsysteme, Amerang) und/oder gemäß den in der DE 197 57.200.6-33 beschriebenen Verfahren. Die Scan-Chain benötigt dazu einen zusätzlichen nicht unerheblichen Hardware- und Flächenaufwand für jedes Register. Dieser kann nunmehr, zumindest für die Register, die debugbar sind, entfallen, wenn - wie erfindungsgemäß vorgeschlagen - die Produktionstestanlagen über geeignete Schnittstellen (z.B. parallel, seriell, JTAG, etc.) Zugriff auf die Register erhalten.

### 2.2.2 Anhalten oder Verlangsamen des Taktes

Durch das Auftreten von Bedingung und/oder Vorbedingung kann der Takt entweder angehalten oder verlangsamt werden, um hinreichend Zeit zum Auslesen zur Verfügung zu stellen. Ausgelöst wird dieser Debugbeginn insbesondere entweder direkt durch eine PAE, die die (Vor)Bedingung(en) berechnete oder durch eine übergeordnete Einheit (z. B. Ladelogik/CT, Host-prozessor) aufgrund beliebiger Aktionen, beispielsweise durch die Information, daß an einer PAE eine (Vor)Bedingung auftrat und/oder durch eine Aktion innerhalb des DebugProzessors und/oder durch ein beliebiges Programm und/oder eine beliebige externe/periphere Quelle. Zum Informieren stehen Triggermechanismen entsprechend P 44 16 881.0-53, DE 196 51 075.9-53, DE 197 04 728.9, DE 198 07 872.2, DE 198 09 640.2, DE 100 28 397.7 zur Verfügung. Alternativ kann beim Debuggen der Takt generell verlangsamt werden. Sollen nur Arrayteile debuggt werden, kann eine partielle Heruntertaktung vorgesehen werden.

Sofern der Takt verlangsamt wird, muss durch den Debugprozessor innerhalb des verlangsamten Zyklus des Verarbeitungstaktes alle relevante Debug-Information aus den PAEs ausgelesen werden. Dazu ist es sinnvoll und bevorzugt, den Takt nur partiell zu verlangsamen, also den Arbeitstakt zu senken oder anzuhalten, aber den Takt für den Auslesemechanismus weiter fortzufahren. Des weiteren ist es sinnvoll und bevorzugt, generell die Register zum Datenerhalt mit Takt zu versorgen.

Nach dem Anhalten des Taktes kann ein Single-Step Modus realisiert werden, d.h. der Debugprozessor hält den Verarbeitungstakt so lange an, bis er alle Debug-Information ausgelesen hat. Danach startet er den Verarbeitungstakt wieder für einen Zyklus und hält ihn erneut bis nach dem Auslesen aller relevanten Debug-Informationen an.

Der Auslesetakt und der Takt des Debug-Prozessors sind bevorzugt unabhängig vom Verarbeitungstakt der PAEs, so daß die Datenverarbeitung vom Debugging und insbesondere Auslesen der Debug-Information getrennt ist.

Hardwaretechnisch wird das Anhalten oder Verlangsamen des Taktes durch Methoden nach dem Stand der Technik, wie beispielsweise Gated-Clocks und/oder PLLs und/oder Teiler oder andere Verfahren erreicht. Diese Mittel werden bevorzugt an geeigneten Stellen (Knoten) innerhalb des Clock-Trees eingefügt, so daß eine globale Taktsteuerungen der jeweils tieferliegenden Zweige realisierbar ist. Die Heruntertaktung nur von ausgewählten Arrayteilen ist in den unter Bezug genommenen Anmeldungen des vorliegenden Anmelders offenbart.

Besonders bevorzugt ist das Versenden eine TaktsteuerInformation von einer übergeordneten Einheit (z.B. Ladelogik/CT, Hostprozessor) an sämtliche bzw. sämtliche zu debuggenden PAEs. Dies kann bevorzugt über das Konfigurationsbussystem erfolgen. Die Taktsteuerinformation wird dabei typischerweise gebroadcastet übertragen, d.h. alle PAEs erhalten dieselbe Information.

Beispielsweise können folgende Taktsteuerinformationen implementiert sein:
- STOP:: Der Arbeitstakt wird angehalten.
- SLOW:: Der Arbeitstakt wird verlangsamt.
- STEP:: Exakt ein Verarbeitungsschritt (Single Step Modus) wird ausgeführt und dann der Arbeitstakt wieder angehalten.
- STEP(n):: n Verarbeitungsschritte werden ausgeführt und dann der Arbeitstakt wieder angehalten.
- GO:: Der Arbeitstakt läuft normal weiter.

Es soll insbesondere erwähnt sein, dass das Verfahren der Taktabschaltung und/oder Verlangsamung ebenso eingesetzt werden kann, um den Stromverbrauch zu reduzieren. Sofern temporär keine Rechenleistung benötigt wird, kann ein "Sleepmode" beispielsweise durch das Abschalten des Arbeitstaktes (STOP) oder durch spezielle Befehle (SLEEP) realisiert werden. Wird nicht die volle Rechenleistung benötigt, kann der Takt durch die Verwendung von SLOW verlangsamt werden und/oder temporär durch STEP(n) ausgesetzt werden. Insoweit ist das Verfahren optional und/oder zusätzlich zu den in der DE 102 06 653.1 beschriebenen Verfahren zur Reduzierung der Verlustleistung einsetzbar.

Ein Problem des Broadcastings von Taktsteuerinformationen ist die Übertragungszeit des Broadcastes durch das Array aus PAEs. Die Übertragung kann bei höheren Taktfrequenzen nicht innerhalb eines Arbeitstaktes erfolgen. Es ist aber zwingend notwendig, dass sämtliche PAEs zur gleichen Zeit auf die Taktsteuerinformationen reagieren. Bevorzugt wird die Taktsteuerinformation daher über ein gepipelintes Bussystem ähnlich des in DE 100 28 397.7 beschriebenen CT-Bussystems übertragen. Weiterhin wird ein Zahlenwert (LATVAL) den Taktsteuerinformationen hinzugefügt der gleich-oder größer der maximalen Länge der Pipeline des Bussystems ist. In jeder Pipelinestufe wird taktweise der Zahlenwert dekrementiert (Subtraktion von 1). Jede PAE, die die Taktsteuerinformation erhält, dekrementiert im weiteren den Zahlenwert mit jedem Takt. Damit ist sichergestellt, dass der Zahlenwert in dem gepipelinten Bussystem und den PAEs, die die Taktsteuerinformation bereits empfangen haben, immer exakt gleich ist. Erreicht der Zahlenwert den Wert 0, ist sichergestellt, daß alle PAEs die Taktsteuerinformation erhalten haben. Jetzt tritt die Taktsteuerinformation in Kraft und das Verhalten des Taktes wird entsprechend modifiziert.

Durch das beschriebene Verfahren entsteht eine weitere Latenzzeit (Latency). Diese kann beispielsweise durch die nachfolgend beschriebene Registerpipeline zusätzlich abgefangen werden, oder, wie besonders bevorzugt, durch die Definition der (Vor)Bedingung abgefangen werden, indem die (Vor) Bedingung soweit vorgesetzt wird, daß die Latenzzeit bereits berücksichtigt ist.

Es soll besonders erwähnt werden, daß die Latenzzeit im Single-Step Modus vernachlässigbar ist, da sie nur bei der Abschaltung es Taktes (STOP) eine Rolle spielt. Da der Befehl STEP immer nur exakt einen Schritt ausführt, kommt es während des Single-Step Betriebes durch keinerlei Verfälschung (Verzögerung) der Debugdaten durch die Latenzzeit.

### 2.2.3 Registerpipeline zum Ausgleichen der Latency

Bei höheren Betriebsfrequenzen kann es zu einer Latenzzeit zwischen dem Erkennen des Debugbeginns und dem Anhalten oder Verlangsamen des Taktes kommen. Diese Latenzzeit ist exakt vorherbestimmnbar, da die Position der verzögernden Register in der VPU durch Hardware und/oder den zu debuggenden Algorithmus definiert und durch den Debugger daher exakt berechenbar ist.

Durch die Latenzzeit verschieben sich jedoch die dem Debüg-Prozessor zur Verfügung gestellten Informationen derart, daß nicht mehr die korrekten Debuginformationen ausgelesen werden können. Bevorzugt wird dies durch ein entsprechendes Festlegen der (Vor)Bedingung durch den Programmierer gelöst. Optional kann durch das Einfügen einer mehrstufigen Registerpipeline, die die Debuginformation in jedem Takt um ein Register weiter überträgt, der Debugprozessor auf so viele Takte an Debuginformationen-zurückgreifen, wie die Registerpipeline lang ist. Die Länge der Registerpipeline ist so auszulegen, daß sie der maximal zu erwartenden Latenz entspricht. Aufgrund der exakten Berechenbarkeit der Latenzzeit ist es nunmehr dem Debug-Programm möglich, die zeitlich korrekte, relevante Debug-Information aus der Registerpipeline auszulesen.

Ein auftretendes Problem bei der Verwendung von Registerpipelines ist, daß diese verhältnismäßig lang und damit, bezogen auf die für die Realisierung notwendige Siliziumfläche, teuer sind.

### 2.3 Sichtbare Debug-Informationen

Bei dieser Methode wird im wesentlichen nach Auftreten der (Vor)Bedingung debugt, da erst danach der Takt verlangsamt oder angehalten wird und das Auslesen der Debug-Information erfolgt. Debug-Informationen, die vor dem Auftreten der (Vor)Bedingung liegen, sind daher zunächst nicht sichtbar.

Es ist jedoch, wenngleich auch unter Verlust an Arbeitsleistung, möglich eine VPU sofort vom Start einer Applikation an mit verlangsamten Takt oder Single-Step-Modus zu betreiben. Vom Start an werden die relevanten Debug-Informationen vom Debug-Prozessor ausgelesen.

### 3. Methode B

### 3.1 Grundprinzip

Relevante Debug-Informationen aus den Speichereinheiten, die gemäß P 44 16 881.0-53, DE 196 54.846.2-53p DE 199 26 538.0, DE 101 39 170. 6 und deren Zusatzanmeldungen, DE 101 10 530. 4 die Anwendungsdaten und Zustände eines bestimmten Arbeitsschrittes beinhalten, werden an das Debug-Programm übertragen. Diese Speichereinheiten, nachfolgend auch Arbeitsspeicher genannt, arbeiten im Maschinenmodell nach der P 44 16 881.0-53, DE 196 54 846.2-53, DE 101 39 170.6 und deren Zusatzanmeldungen, DE 199 26 538.0, DE 101 10 530.4 quasi als Register zur Speicherung von Daten, die innerhalb eines Konfigurationszykluses im PA oder Teilen des PAs berechnet wurden. Es wird insbesondere auf die Patentanmeldung DE 101 39 170.6 und deren Zusatzanmeldungen verwiesen, in der die Verwendung der Speichereinheiten als Register (REG) zur Realisierung eines Prozessormodells detailliert beschrieben ist. Eine Speichereinheit besteht dabei aus einer beliebigen Anordnung und Hierarchie von unabhängigen und abhängigen Speichern. Es ist möglich, gleichzeitig mehrere unterschiedliche Algorithmen auf dem PA (Processing Array) auszuführen, die dann unterschiedliche Speicher verwenden.

Wesentlich für die Anwendung dieser Methode ist, daß Daten und/oder algorithmisch relevante Zustände in die den PAEs zugeordneten Speichereinheiten abgelegt sind, wobei eine Speichereinheit jeweils zumindest derart dimensioniert ist, daß alle relevanten Daten und/oder Zustände eines Zyklus gespeichert werden können; hierbei kann die Länge eines Zyklus durch die Größe der Speichereinheit bestimmt sein und ist es bevorzugt auch (vgl. DE 196 54 846.2-53). Mit anderen Worten wird die Zykluslänge der Hardware angepaßt.

Unterschiedliche Daten und/oder Zustände werden derart in die Speichereinheiten gespeichert, daß diese eindeutig dem Algorithmus zugeordnet werden können. Dadurch kann der Debugger die relevanten Daten und/oder Zustände (Debug-Information) eindeutig identifizieren.

Die relevanten Debug-Informationen können - insbesondere auch vorab - durch den Programmierer innerhalb des Debug-Programmes festgelegt werden. Diese Debug-Informationen werden aus den Speichereinheiten ausgelesen. Dazu stehen unterschiedliche Methoden zur Verfügung; einige Möglichkeiten werden nachfolgend näher beschrieben. Nach dem Auslesen aller relevanter Debug-Informationen wird der nächste Ronfigurationszyklus ausgeführt und erneut die relevanten Debug-Informationen ausgelesen. Dies wiederholt sich so lange, bis der Programmierer/Debugger den Debug-Vorgang abbricht.

Mit anderen Worten. Die relevanten Daten und/oder Statusinformationen werden nicht taktweise, sondern konfigurationsweise an den Debugger übertragen. Dies geschieht aus den Speichereinheiten, die mit den Registern einer CPU vergleichbar sind.

### 3.2 Unterstützung durch die Hardware

Wesentlich für die Funktionsweise des Debuggers ist die Möglichkeit, durch die CT oder einen anderen extern angeschlossenen Prozessor (im Folgenden DebugProzessor (DB) genannt), die beispielsweise auch interne(n) Arbeitsspeicher der VPU zu lesen. Eine derartige Möglichkeit ist z.B. durch den Anschluß der CT an die Arbeitsspeicher zum Vorladen und Lesen der Daten und/oder durch die in der DE 199 26 538.0 beschriebene Verfahren zum Herausschreiben der internen Speicher an externe Speicher gegeben. In einer mögliche Ausgestaltung kann auf Arbeitsspeicher durch.verschieden Verfahren nach dem Stand der Technik (z.B. Shared Memory, Bank Switching) derart vom DebugProzessor zugegriffen werden, dass der Datenaustausch mit dem DB weitestgehend unabhängig von einer weiteren Datenverarbeitung in der VPU erfolgen kann.

In einer möglichen Ausgestaltung kann z. B. entsprechend Methode A durch eine oder mehrere der vorstehend beschriebenen Maßnahmen der Takt der VPU zum Auslesen der Speicher gegebenenfalls entweder entsprechend verlangsamt oder angehalten werden und/oder gegebenenfalls im Single-Step-Modus betrieben werden. Dabei kann je nach Implementierung der Arbeitsspeicher, z. B. beim Bank-Switch-Verfahren, auf einen besonderen Eingriff in den Takt verzichtet werden. Typischerweise geschieht das Anhalten oder Verlangsamen des Taktes nach Methode B und das Auslesen und/oder Kopieren und/oder Umschalten der Arbeitsspeicher nur, wenn ein Datenverarbeitungszyklus bzw. Konfigurationszyklus beendet ist.

Mit anderen Worten ist ein wesentlicher Vorteil von Methode B, dass keine besondere Unterstützung durch die Hardware erforderlich ist.

In einer möglichen Ausgestaltung muß ein DB lediglich zugriff auf die Arbeitsspeicher besitzen. In einer besonders zu bevorzugenden Ausgestaltung geschieht der Zugriff auf die Arbeitsspeicher-durch eine geeignete Konfiguration der VPU, die dadurch die Arbeitsspeicher selbständig und ohne Modifikation ausliest und an einen DB überträgt.

### 3.3 Zugriff auf Debug-Information

In der P 44 16 881.0-53, DE 196 54 846.2-53, DE 101 39 170.6, DE 199 26 538.0 sind Datenverarbeitungsverfahren beschrieben, bei denen zyklisch eine Menge an Operationen auf einen rekonfigurierbaren Datenverarbeitungsbaustein abgebildet werden. In jedem Zyklus wird eine Mehrzahl von Daten berechnet, die von einer peripheren Quelle und/oder einen internen/externen Arbeitsspeicher stammen und an eine periphere Quelle und/oder einen internen/externen Arbeitsspeicher geschrieben werden. Dabei können jeweils unterschiedliche und/oder vor allem mehrere unabhängige Arbeitsspeicher gleichzeitig verwendet werden. Beispielsweise können in diesem Datenverarbeitungsverfahren die Arbeitsspeicher oder ein Teil der Arbeitsspeicher als Registersatz dienen.

Nach der DE 101 39 170.6 und der DE 199 26 538.0 werden dabei sämtliche Daten und Zustände, die für die weitere Datenverarbeitung relevant sind, in die Arbeitsspeicher abgelegt und/oder aus selbigen gelesen. In einem bevorzugten Verfahren werden für die weitere Datenverarbeitung irrelevante Zustände nicht gespeichert.

Die Unterscheidung zwischen relevanten und irrelevanten Zuständen soll an folgendem Beispiel aufgezeigt werden, es soll zu Offenbarungszwecken dabei insbesondere auf die Ausführungen in der DE 101 39 170.6 verwiesen werden:

Die Zustandsinformation eines Vergleichs ist beispielsweise für die weitere Verarbeitung der Daten wesentlich, da dieser die auszuführenden Funktionen bestimmt.

Ein sequenzieller Dividierer entsteht beispielsweise durch Abbildung eines Divisionsbefehles auf eine Hardware, die nur die sequenzielle Division unterstützt. Dadurch entsteht ein Zustand, der den Rechenschritt innerhalb der Division kennzeichnet. Dieser Zustand ist irrelevant, da für den Algorithmus nur das Ergebnis (also die ausgeführte Division) erforderlich ist. In diesem Fall werden also lediglich das Ergebnis und die Zeitinformation (also die Verfügbarkeit) benötigt.

Die Zeitinformation ist beispielsweise in der VPU-Technologie nach P 44 16 881.0-53, DE 196 51 075.9-53, DE 199 26 538.0 durch das RDY/ACK Handshake erhältlich. Hierzu ist jedoch besonders anzumerken, daß das Handshake ebenfalls keinen relevanten Zustand darstellt, da es lediglich die Gültigkeit der Daten signalisiert, wodurch sich wiederum die verbleibende relevate Information auf die Existenz gültiger Daten reduziert.

In der DE 101 39 170.6 wird eine Unterscheidung zwischen lokal und global relevanten Zuständen aufgezeigt:
**lokal**: Der Zustand ist nur innerhalb einer einzigen abgeschlossenen Konfiguration relevant. Daher muß der Zustand nicht zwingend gespeichert werden.
**global:** Die Zustandsinformation wird für mehrere Konfigurationen benötigt. Der Zustand muß gespeichert werden.

Es ist nunmehr denkbar, daß der Programmierer einen lokal relevanten Zustand debuggen will, der nicht in den Speichern abgelegt-ist. In diesem Fall kann die Applikation dahingehend modifiziert werden, daß eine Debug-Konfiguration entsteht-(äquivalent zum Debug-Code von Prozessoren), die eine Modifikation zum "normalen" Code der Applikation derart aufweist, daß dieser Zustand zusätzlich in die Speichereinheit geschrieben und damit dem Debugger zur Verfügung gestellt wird. Dadurch entsteht eine Abweichung zwischen Debug-Code und tatsächlichem Code, die zu einem unterschiedlichen Verhalten der Codes führen kann.

In einer daher besonders bevorzugten Ausführung wird keine Debug-Konfiguration verwendet. Vielmehr wird die zu debuggende Konfiguration derart terminiert, dass die für Debugging-zwecke zusätzlich erforderlichen Daten die Terminierung überdauern, d.h. weiterhin gültig in den entsprechenden Speicherstellen (REG) (z.B. Register, Zähler, Speicher) verbleiben.

Wenn die zu debuggende Konfiguration derart terminiert wird, daß die für Debugging-Zwecke zusätzlich erforderlichen Daten die Terminierung überdauern, ist es möglich, ein Debuggen einfach dadurch durchzuführen, daß nicht die nächste, bei normalem Programmablauf erforderliche Konfiguration geladen wird, sondern stattdessen eine Konfiguration, über welche die zu den Debugging-Zwecken erforderlichen Daten in die Debug-Einheit bzw. das Debug-Mittel übertragen werden. Es sei darauf hingewiesen, daß bei einem solchen Debuggen auch im späteren Ablauf des Programmes stets die zu Debug-Zwecken erforderlichen Daten mit abgespeichert werden können, wodurch sichergestellt ist, daß das später ausgeführte Programm in exakt der Weise einem Debug-Prozeß unterworfen wurde wie erforderlich. Nach Auslesen der Debug-Information durch eine dedizierte Debug-Konfiguration kann dann mit der normalen Programmausführung fortgefahren werden.

Eine Konfiguration wird geladen, diese verbindet die REG in geeigneter Weise und definierter Reihenfolge mit einem oder mehreren globalen Speicher(n), auf die der DB Zugriff hat (z.B. Arbeitsspeicher).

Vorgeschlagen wird also, daß eine Konfiguration geladen wird, diese die REG in geeigneter Weise verbindet und in definierter Reihenfolge mit einem oder mehreren globalen Speichern verbindet, auf die der DB Zugriff hat (z. B. Arbeitsspeicher).

Die Konfiguration kann beispielsweise Adressgeneratoren verwenden, um auf den/die globalen Speicher zuzugreifen. Die Konfiguration kann beispielsweise Adressgeneratoren verwenden, um auf als Speicher ausgestaltete REG zuzugreifen. Entsprechend der konfigurierten Verbindung zwischen den REG werden die Inhalte der REG in einer definierten Reihenfolge in den globalen Speicher geschrieben, wobei die jeweiligen Adressen von Adressgeneratoren vorgegeben werden. Der Adressgenerator generiert die Adressen für den/die globalen Speicher(n) derart, daß die beschriebenen Speicherbereiche (DEBUGINFO) der entfernten zu debuggenden Konfiguration eindeutig zugeordnet werden können.

Das Verfahren entspricht dem Kontext-Switch in DE 102 06 653.1 und DE 101 39 170.6.

Der DB kann nunmehr auf die Daten innerhalb eines ihm zugänglichen Speicherbereiches (DEBUGINFO) zugreifen. Soll das Debugging mittels eines Single-Step Verfahrens durchgeführt werden, kann nach jedem single step einer zu debuggenden Konfiguration ein Kontext-Switch derart durchgeführt werden, dass sämtliche Daten erhalten bleiben und die zu debuggende Information aus den REG in einen Arbeitsspeicher geschrieben Wird. Sodann wird wiederum unter Erhalt der Daten die zu debuggende Konfiguration wieder konfiguriert und für einen weiteren single step ausgeführt. Dies geschieht für jeden zu debuggenden single step der zu debuggenden Konfiguration. Auf die Möglichkeit eines Debugging unter Verwendung der als "Wave-Rekonfiguration" bekannten Prinzipien sei hingewiesen.

### 3.4 Sichtbare Debug-Informationen

Ein Debuggen vor der (Vor)Bedingung kann vergleichsweise einfach und ohne große Performance-Verluste durchgeführt werden, da die benötigten Debug-Informationen in Arbeitsspeichern - verfügbar sind. Durch das Übertragen der Arbeitsspeicher in andere Speicherbereiche, auf die der DB bevorzugt direkten Zugriff hat, kann die Debug-Information einfach sichergestellt werden. Eine noch schnellere Methode ist, die Arbeitsspeicher durch ein Bank-Switching-Verfahren (nach dem Stand der Technik) derart zwischen den einzelnen Konfigurationen umzuschalten, daß die Debug-Information in einer jeweils neuen Bank liegt. Das Umschalten kann sehr zeitoptimierend, im Optimalfall sogar ohne Auswirkung auf die Verarbeitungsleistung erfolgen.

Es ist bereits offenbart worden, daß bei einer VPU Daten blockweise in einen Speicherbereich übertragen werden können. Dieser kann auch außerhalb des eigentlichen PA liegen und/oder einen Dual-Ported-RAM oder dergleichen aufweisen, so daß es möglich ist, auf die eingeschriebene Information von außen leicht zuzugreifen.

### 4. Funktionsweise des Debuggers

Das Debugger-Programm selbst kann auf einem DB außerhalb des PAs ablaufen. Alternativ dazu kann eine VPU selbst den DB darstellen, entsprechend der Methoden, die bei Prozessoren angewendet werden. Dazu kann ein Task- oder Kontextswitch (SWITCH) entsprechend den Ausführungen in PACT11 ausgeführt werden. Die Debuginformationen des zu debuggenden Programmes werden bei einem SWITCH zusammen mit den relevanten Daten gesichert und das Debugger Programm geladen, das die Informationen auswertet und/oder interaktiv mit dem Programmierer verarbeitet. Danach wird erneut ein SWITCH durchgeführt (bei welchem die relevanten Informationen des Debuggers gesichert werden) und das zu debuggende Programm wird weitergeführt.

Es sei auch erwähnt, daß als Debugger ein Prozessor-Teilbereich vorgesehen werden kann.

Die Debug-Information wird vom Debugger entsprechend Methode A und/oder B gelesen und in einen von der Datenverarbeitung separaten Speicher und/oder Speicherbereich gespeichert, auf den der DB bevorzugt direkten Zugriff besitzt. Durch das Debugger-Programm werden die Breakpoints und (Vor)Bedingungen definiert. Ebenfalls kann das Debugger-Programm die Kontrolle über die Ausführung der Applikation, insbesondere den Ausführungsstart und das Ausführungsende übernehmen.

Der Debugger stellt dem Programmierer eine geeignete Arbeitsumgebung zur Verfügung mit ggf. graphischer Oberfläche. In einer besonders bevorzugten Ausführung ist der Debugger in eine komplexe Entwicklungsumgebung integriert und tauscht mit dieser Daten und/oder Steuerinformation aus. Insbesondere kann der Debugger die aus den Arbeitsspeichern gelesenen Daten zur beliebigen Weiterverarbeitung auf einen Datenträger (Festplatte, CDROM) speichern und/oder innerhalb eines Netzwerkes (wie Ethernet) ablaufen.

Der erfindungsgemäße Debugger kann zudem gemäß DE 101 29 237.6-53 innerhalb einer Entwicklungsumgebung mit anderen Werkzeugen und insbesondere auch Debuggern kommunizieren; wobei in einer bevorzugten Ausgestaltung die Steuerung und/oder Definition der Debugparameter von einem anderen Debugger aus übernommen werden kann. Ebenso kann der Debugger die von ihm generierte Debug-Information einem anderen Debugger zur Verfügung stellen und/oder von diesem dessen Debug-Information erhalten.

Insbesondere das Feststellen des Auftretens von Breakpoints und/oder (Vor)Bedingung ist durch einen anderen Debugger bzw. den Einheiten, die dieser andere Debugger debugt, durchführbar. Der erfindungsgemäße Debugger und die VPU reagieren dann entsprechend.

Der andere Debugger kann insbesondere der Debugger eines mit einer VPU gekoppelten anderen Prozessors (CT, bzw. ARC bei Chameleon, Pentium, AMD usw.) sein.

Insbesondere kann der andere Debugger auf einem der VPU zugeordneten und/oder gekoppelten Prozessor ablaufen und/oder der zugeordnete Prozessor der DB sein, beispielsweise eine CT. bzw. ARC bei Chameleon. In einer besonders bevorzugten Ausgestaltung kann der zugeordnete Prozessor ein Host-Prozessor sein, wie beispielsweise in der 60/317,876 und/oder der DE 102 06 856.9 beschrieben.

### 5 . Bewertung der Methoden

Die Methode A ist erheblich zeit - und ressourcenintensiver als die Methode B, bei der kaum zusätzliche Hardware erforderlich ist und zudem ggf. das zeitaufwendige Auslesen der Debug-Information vom Start der Applikation an entfällt. Daher ist Methode B grundsätzlich vorzuziehen. Für Compiler nach DE 101 39 170.6 und deren Zusatzanmeldungen ist die Methode B eindeutig zu präferieren.

Es wurde erkannt, daß insbesondere die Verwendung beider Methoden A und B gemeinsam zu den besten und transparentesten Debuggingergebnissen führt. Insbesondere kann je nach Tiefe des zu debuggenden Fehlers zunächst unter Zuhilfenahme der schnellen Debuggingmethode B debuggt werden und nach hinreichende Lokalisierung des Fehlers sodann per Methode A die Details in der "Tiefe" analysiert werden.

### 6. Mixed Mode Debugger

Bei der Anwendung der besonders bevorzugten Methode B kann es zu dem Problem kommen, dass die in den Speichern befindliche sichtbare Information nicht hinreichend ist.
Typischerweise kann ein detaillierteres Debugging folgendermassen erfolgen:
a) Die sichtbare Debuginformatiön (PREINFO) vor der Konfiguration einer einen Breakpoint enthaltenden Konfiguration wird gesichert. Bei Auftreten eines Fehlers bei dem Breakpoint wird die dann sichtbare Debuginformation (POSTINFO) gesichert. Basierend auf der PREINFO Information wird ein Software-Simulator gestartet, der die zu debuggende(n) Konfiguration(en) simuliert. Der Simulator kann dabei jeden Wert innerhalb der PAEs und der Bussysteme bestimmen und (ggf. auch graphisch und/oder textuell) ausgeben, wodurch ein detaillierter Einblick in den Ablauf des Algorithmus zum Zeitpunkt des Auftretens des Fehlers erreicht wird. Insbesondere ist es möglich, die jeweils simulierten Werte mit den Werten von POSTINFO zu vergleichen, um Differenzen schnell zu erkennen.
b) Die sichtbare Debuginformation vor einem Breakpoint wird gesichert. Bei Auftreten eines Breakpoints wird basierend auf dieser Information ein Software-Visualisierer gestartet. Der zu debuggende Baustein wird nunmehr in einem Single-Step Verfahren betrieben, das das Auslesen sämtlicher relevanter Daten nach Methode A ermöglicht. Diese Daten können nunmehr entweder direkt (ggf. auch graphisch und/oder textuell) ausgegeben werden und/oder an einen Simulator weitergeleitet werden, dessen Simulation sodann auf den detaillierteren Daten beruht, und danach wie bekannt ausgegeben werden.

### 6.1 Vorteile eines Mixed-Mode-Debuggers

Der Mixed-Mode-Debugger ermöglicht die detaillierte Analyse der Abläufe innerhalb eines Bausteines. Durch die Möglichkeit gemäß Methode B, bis zu einem gesetzten Breakpoint mit voller Geschwindigkeit zu arbeiten und danach ggf. anzuhalten, zu verlangsamen und/oder ggf. in einen Single-Step-Modus zu gehen, wird das Debugging zeiteffizient, wodurch das Testen großer Datenmengen und/oder komplexer Algorithmen ermöglicht wird. Das bevorzugte Aufsetzen eines Simulators nach dem Auftreten des Breakpoints auf Basis der aktuellen Daten und Zustände ermöglicht einen genauen Einblick in die Hardware. Sofern der Zeitaufwand für die Simulation zu hoch ist und/oder die 100% Übereinstimmung des Simulators mit der Hardware fraglich ist, ermöglicht das Zurücklesen von Daten im Single-Step-Modus nach Auftreten eines Breakpoints gemäß Methode A oder entsprechend des Kontext-Switch Verfahrens nach DE 102 06 653.1 und DE 101 39 170.6 ein 100% korrektes Debugging des-Algorithmus und/oder auch der Hardware selbst.

### 7. Beschreibung der Figuren

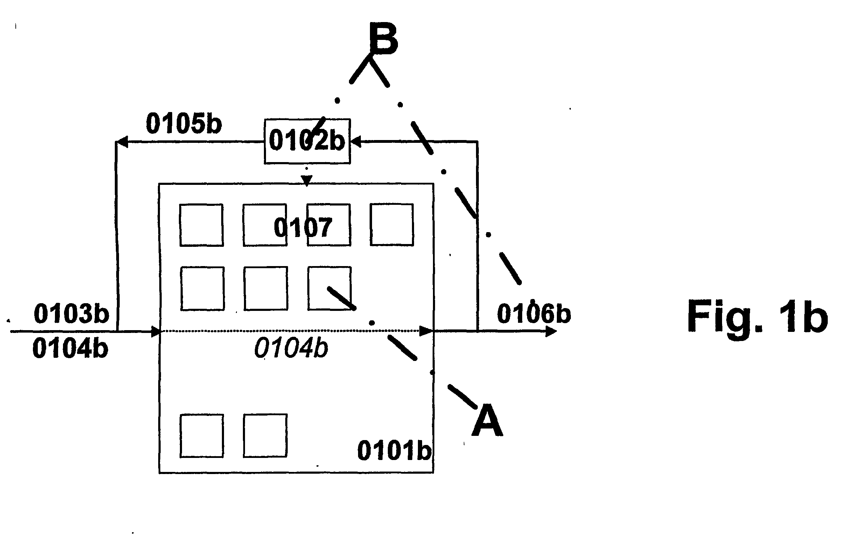

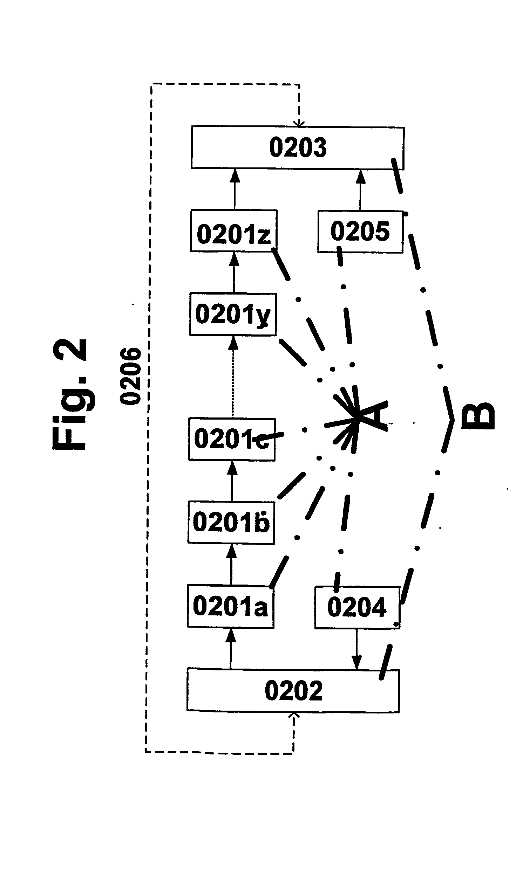

Figur 1 und 2 entsprechen der Patentanmeldung DE 101 39 170.6. Die unterschiedlichen Ansätze der Methoden A und B wurden in die Figuren eingezeichnet (A, B) **Figur 1b** zeigt eine Repräsentation des endlichen Automaten durch eine rekonfigurierbare Architektur nach P 44 16 881.0-53 und DE 196 54 846.2-53 (DE 196 54 846.2-53, Fig. 12-15). Das kombinatorischen Netz wird durch eine Anordnung von PAEs 0107 ersetzt (0101b) . Das Register (0102) wird durch einen Speicher (0102b) ausgeführt, der mehrere Zyklen speichern kann. Die Rückkopplung gemäß 0105 erfolgt durch 0105b. Die Eingänge (0103b bzw. 0104b) sind äquivalent 0103 bzw 0104. Der direkte Zugriff auf 0102b kann ggf. durch einen Bus durch das Array 0101b realisiert werden. Der Ausgang 0106b ist wiederum äquivalent 0106.

**Figur 2** zeigt die Abbildung eines endlichen Automaten auf eine rekonfigurierbare Architektur. 0201(x) repräsentieren das kombinatorische Netz (das entsprechend Figur 1b als PAEs ausgestaltet sein kann). Es existiert ein oder mehrere Speicher für Operanden (0202) und ein oder mehrere Speicher für Ergebnisse (0203). Zusätzlich Daten Ein-/Ausgänge gem. 0103b, 0104b, 0106b) sind der Einfachheit halber nicht dargestellt. Den Speichern zugeordnet ist jeweils ein Adressgenerator (0204, 0205).
Die Operanden- und Ergebnisspeicher (0202, 0203) sind physikalisch oder virtuell derart miteinander verkoppelt, daß beispielsweise die Ergebisse einer Funktion einer anderen als Operanden dienen können und/oder Ergebnisse und Operanden einer Funktion einer anderen als Operanden dienen können. Eine derartige Kopplung kann beispielsweise durch Bussysteme hergestellt werden oder durch eine (Re) Konfiguration, durch welche die Funktion und Vernetzung der Speicher mit den 0201 neu konfiguriert wird.

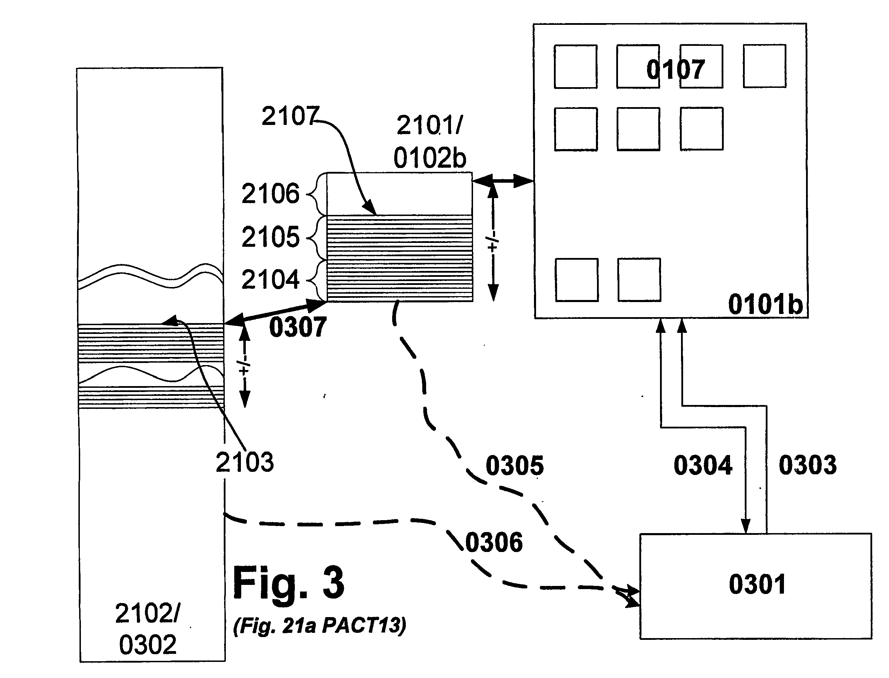

**Figur 3** zeigt eine mögliche schematische Struktur des Debuggings nach Methode B. Es sei insbesondere beispielhaft auf die Figuren 19, 20, 21 der Patentanmeldung DE 199 26 538.0 verwiesen, in welcher die Grundlage der Speicher beschrieben ist.

0101b und 0102b ist wie bereits beschrieben dargestellt. Zusätzlich ist eine externer Speichereinheit dargestellt (0302), der möglicherweise ähnlich DE 199 26 538.0 an 0102b angeschlossen (0307) sein kann. Es soll besonders darauf hingewiesen werden, daß sowohl 0102b als auch 0302 externe oder interne Speichereinheiten sein können. Ebenfalls soll eine Speichereinheit als mindestes ein Register, eine Menge von Registern oder ein Speicher (RAM, Flash, o.ä.) oder Massenspeicher (Festplatte, Band, o.ä.) definiert sein.

Die debuggende Einheit 0301 kann Breakpoints innerhalb 0101b setzen (0303), auf Basis derer der eigentliche Debug Vorgang ausgelöst wird. Durch das Erreichen eines Breakpoints wird eine Information (0304) an 0301 gesendet, die den Debug Vorgang startet; zugleich werden auch alle 0101b interenen Vorkehrungen zum Debuggen (z.B. ein Anhalten und/oder Verlangsamen des Taktes) ausgelöst. Alternativ kann auch durch 0301 die Information generiert und an 0101b gesendet werden. Über 0305 und/oder 0306 kann 0301 auf die Daten und/oder Zustände aus dem Speicher 0102b und/oder dem Speicher 0302 zugreifen. Der Zugriff kann zum Beispiel
1. durch eine Speicherkopplung (Block-Move, d.h. kopieren der Speicher in einen anderen, von 0301 kontrollierten Bereich),
2. durch eine Leitung (serielle oder parallele Leitung, über die ein oder mehrere Speicherbereich(e) übertragen wird/werden, z.B. JTAG),
3.Buskopplungen gleich welcher Art (die Speicher werden. ähnlich eines DMA-Verfahren arbitriert und von 0301 verarbeitet)
erfolgen.

Als Beispiel wurde eine Figur aus der DE 199 26 538.0 gewählt. Es soll ausdrücklich darauf hingewiesen werden, daß grundlegend jedes Speicherverfahren und jede Speicherkopplung (Stack, Random-Access, FIFO, usw.) entsprechend bearbeitet werden kann.

Die Figuren 4a und 4b zeigen weitere möglichen Ausgestaltungen und wurden aus der Patentanmeldung DE-102 06 856.9 entnommen.

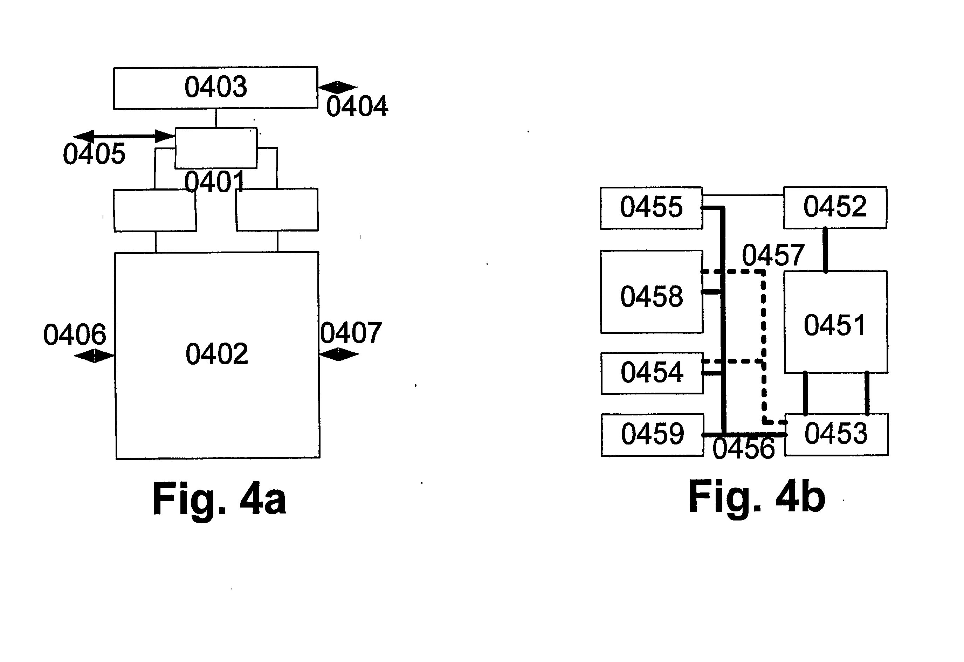

Der Aufbau einer besonders bevorzugten VPU ist in Figur 4a dargestellt. Vorzugsweise hierarchische Konfigurationsmanager (CT's) (0401) steuern und verwalten eine Anordnung von rekonfigurierbaren Elementen (PACs) (0402) . Den CT's ist ein lokaler Speicher für die Konfigurationen zugeordnet (0403). Der Speicher verfügt weiterhin über ein Interface (0404) zu einem globalen Speicher, der die Konfigurationsdaten zur Verfügung stellt. Über ein Interface (0405) sind die Konfigurationsabläuft steuerbar. Ein Interface der rekonfigurierbaren Elemente (0402) zur Ablaufsteuerung und Ereignisverwaltung (0406) ist vorhanden, ebenso ein Interface zum Datenaustausch (0407). Beipielsweise kann eine der CT's als DB agieren.

**Figur 4b** zeigt einen Ausschnitt aus einem beispielhaften CPU-System, beispielsweise einem DSP des Types C6000 von Texas Instruments (0451). Dargestellt sind Programmspeicher (0452), Datenspeicher (0453), beliebige Peripherie (0454) und EMIF (0455). Über einen Speicherbus (0456) und einen Peripheriebus (0457) ist eine VPU als Coprozessor integriert (0458). Ein DMA-Kontroller (EDMA) (0459) kann beliebige DMA-Transfers, - beispielsweise zwischen Speicher (0453) und VPU (0458) oder Speicher (0453) und Peripherie (0454) durchführen. In diesem Beispiel kann 0451 als DB arbeiten und insbesondere auch der erfindungsgemäße Debugger mit dessen Debugger gekoppelt und/oder in diesen integriert sein.

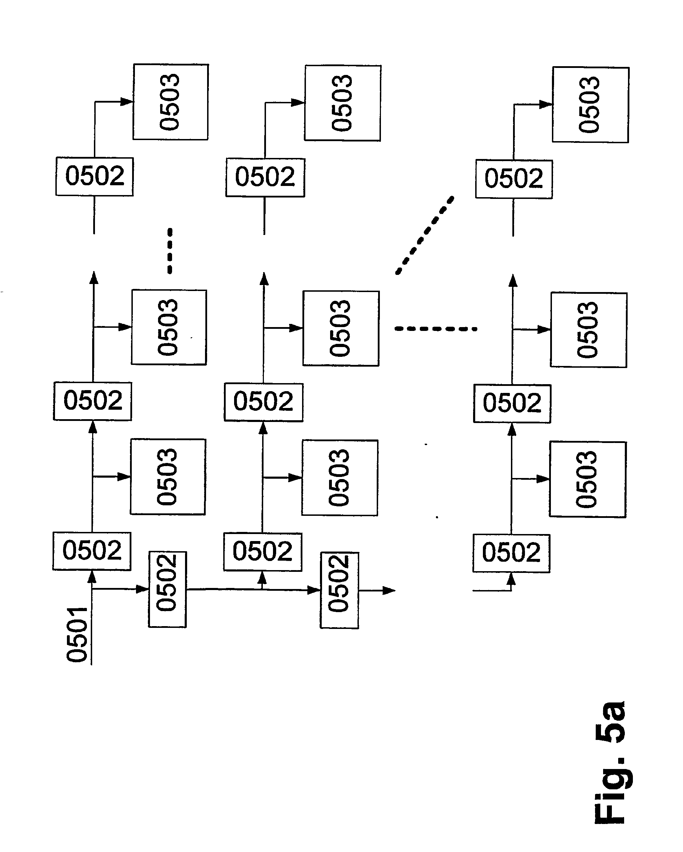

**Figur 5a** zeigt einen beispielhaften Hardwareaufbau, der zum Debuggen von rekonfigurierbaren Prozessoren benutzt werden kann. Hierzu wird ein gepipelinter Konfigurationsbus 0501 verwendet, ähnlich dem aus DE 100 28 397.7 bekannten. Die Pipeline ist über mehrere Registerstufen (0502)-in horizontaler und/oder vertikaler Richtung aufgebaut, um höhere Taktfrequenzen zu erreichen. Der gepipelinte Konfigurationsbus führt zu den zu konfigurierenden Elementen (PAEs) (0503), um diese mit Konfigurationsdaten zu versorgen.

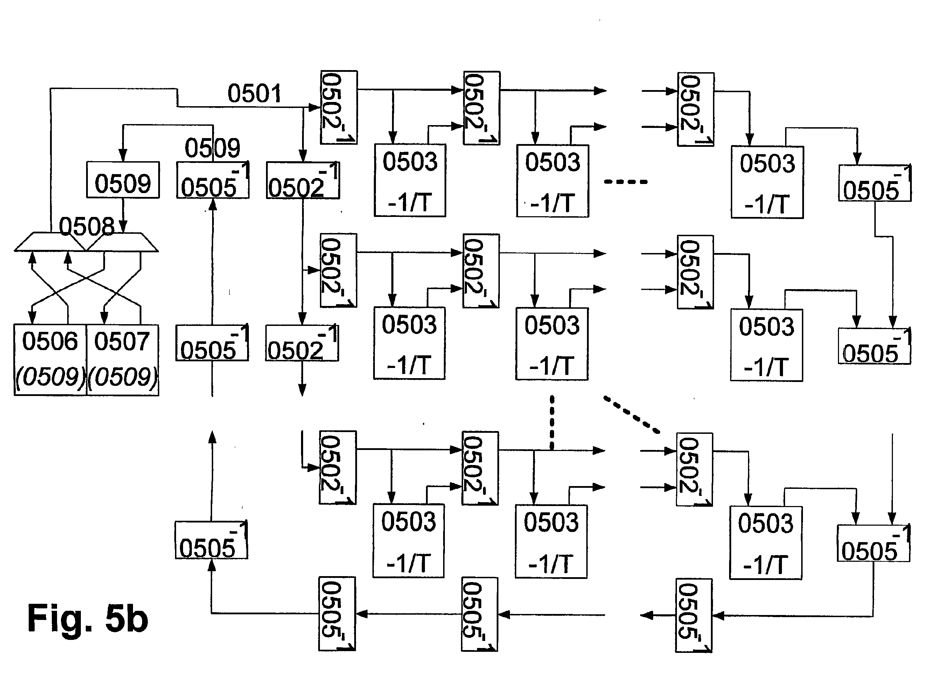

**Figur 5b** zeigt beispielhaft die erforderliche Erweiterung gemäß der vorliegenden Erfindung. Jede Registerstufe (0502) dekrementiert den Zahlenwert (LATVAL) zum Ausgleich der Latenzzeit um 1 (angedeutet durch -1). Ebenso dekrementiert jede PAE (0503), die bereits eine Taktsteuerinformation erhalten hat, diese pro Takt um 1 (angedeutet durch -1/T). Auf die PAEs und insbesondere deren internen Register kann nunmehr nicht nur schreibend, sondern auch lesend zugegriffen werden, z.B. über eine besondere Steuerleitung (RD), um Debugdaten auszulesen. Zu schreibende und gelesene Daten durchlaufen in diesem Beispiel das Bussystem durch das Array aus PAEs von links nach rechts und in der untersten Zeile in Rückwärtsrichtung. Der Konfigurationsbus ist weiterhin über Registerstufen (0505) pipelineartig zurückgeführt (0504) . In diesem Beispiel kann eine übergeordnete Einheit (CT/Ladelogik, Hostprozessor) (0506) ebenso lesend und schreibend auf den Bus zugreifen, wie ein dediziertes Testinterface (0507). Das Testinterface kann einen eigenen Testkontroller aufweisen und insbesondere kompatibel zu einem oder mehrern marktgängigen Testschnittstellen sein (z.B. JTAG, Tektronix, Rhode&Schwarz, etc). Die Auswahl der bussteuernden Einheit erfolgt über eine Multiplexer/Demultiplexer-Einheit (0508). In (0509 in. Klammern und kursiv dargestellt) oder vor den Einheiten 0506 und 0507 kann eine Schaltung zur Rückrechung der Herkunftsadresse (0509) von Debugdaten, die über 0504 eintreffen, vorgesehen sein. Die Adressberechnungen innerhalb des aufgezeigten Systems geschehen wie folgt: Zunächst wird die Adresse durch 0506 oder 0507 am Bus 0501 angelegt. Die Adresse wird ähnlich der Verarbeitung der Zahlenwerte (LATVAL) zur Latenzberechnung in jeder Registerstufe (0502 und 0505) dekrementiert. Sobald die Adresse gleich 0 ist, wird die nach der Registerstufe liegende PAE selektiert. In der nachfolgenden Registerstufe wird die Adresse negativ, so daß keine weiteren PAEs mehr aktiviert werden. Sofern. Daten aus einer PAE gelesen werden, werden diese zusammen mit der Adresse zurückübertragen. Die Adresse wird dabei in jeder Registerstufe weiter dekrementiert. Eine Rückrechnung in 0509 der bei 0506 und/oder 0507 zusammen mit den Debugdaten eintreffenden Adressen ist nunmehr durch eine einfache Addition möglich, indem die Anzahl der dekrementierenden Registerstufen zu dem eintreffenden Adresswert hinzuaddiert werden. Es soll angemerkt sein, dass die Registerstufen 0502 in Figur 5b leicht unterschiedlich gegenüber den Registerstufen 0502 in Figur 5a ausgestaltet sind. In Figur 5b weisen diese nämlich zusätzlich eine Schaltung (z.B. Multiplexer) zu Auswahl der weiterzuleitenden Daten auf, der entweder die Daten des Busses 0501 weiterschaltet oder den Ausgang der zugeordneten PAE (0503) und somit die DebugDaten. Zur Ansteuerung der Schaltung kann das Auftreffen des Adresswertes gleich 0 dienen.

Es wird nochmals darauf hingewiesen, daß das dedizierte Testinterface (0507) den Industriestandards entspricht. Es kann zu Tests während des Software-Debug-Vorgangs-eingesetzt werden und/oder zu Test während des Zusammenbaus von Hardwarekomponenten und -systemen (z.B. dem Zusammenbau der Schaltungen auf der Platine) und/oder zu Funktionstests des Halbleiterbausteins (Chips) im Rahmen der Halbleiterfertigung. Insbesondere dadurch kann die übliche Scan-Chain zum Test der Register während des Funktionstests des Halbleiters entfallen oder zumindest entsprechend minimiert werden, da dann nur die Register durch die Scan-Chain geführt werden müssen, die nicht vom Bussystem (0501) ansteuerbar sind.

Ebenfalls wird besonders darauf hingewiesen, daß das in Figur 5 erläuterte Verfahren keinesfalls auf die Anwendung bei Konfigurationsbussen beschränkt ist. Gewöhnliche Datenbussysteme können ebenso zu den unterschiedlichen vorab aufgezählten Test- und Debugging-Zeitpunkten und -arten verwendet werden. Insbesondere sei in diesem Zusammenhang auf das in der DE 197 04 742.4 beschriebene Datenbussystem hingewiesen. Die in Figur 5 beschriebenen Verfahren können, für einen Ingenieur mit gewöhnlichen technischen Kenntnissen leicht nachvollziehbar ebenso auf die DE 197 04 742.4 angewendet werden.

Ein Mischbetrieb unterschiedlicher Bussysteme, wie Konfigurationsbussystemen, Datenbussystemen nach DE 197 04 742.4 und gewöhnlichen Datenbussystemen ist desweiteren grundsätzlich möglich. Dazu können mehrere Testinterface vorgesehen sein, oder wie technisch bevorzugt die Multiplexer/Demultiplexerstufe (0508) auf eine Mehrzahl von Bussystemen (n x 0501, n x 0504) ausgelegt werden.

Abschließend soll noch besonders erwähnt sein, dass durch die Rückführung des Bussystems nach Figur 5b auch die in die PAEs zu schreibenden Konfigurationsdaten zurückgeführt werden. Unter Zuhilfenahme der Adressrückrechung (0509) und der zurückgeführten Statusleitung REJ, die nach DE 100 28, 397.7, DE 198 07 872.2, DE 196 54 593.5-53 eine Zurückweisung der Konfigurationsdaten anzeigt, kann auf die Verwendung der Konfigurationazwischenspeicher-FIFOs nach DE 100 28 397.7 Figuren 8 und 9 (0805, 0903) verzichtet werden, da deren Funktionalität nunmehr vollumfänglich über das beschriebene Bussystem abgebildet wird.

### 8. Begriffsdefinition

- **lokal relevanter Zustand**: Zustand, der nur innerhalb einer bestimmten Konfiguration relevant ist.
- **global relevanter Zustand**: Zustand, der in mehreren Konfigurationen relevant ist und zwischen den Konfigurationen ausgetauscht werden muß.
- **relevanter Zustand**: Zustand, der innerhalb eines Algorithmus zur korrekten Ausführung dessen benötigt ,wird und somit durch den Algorithmus beschrieben ist und verwendet wird.
- **irrelevanter Zustand**: Zustand, der für den eigentlichen Algorithmus ohne Bedeutung ist und auch nicht im Algorithmus beschrieben ist, der jedoch von der ausführenden Hardware implementierungsabhängig benötigt wird.

## Patentansprüche

1. Verfahren zum effizienten Debuggen eines Programms aus einer Reihe sukzessiver, auf einer dynamisch rekonfigurierbaren Architektur abzuarbeitender Konfigurationen, wobei die Architektur als Prozessor oder Co-Prozessor betrieben wird, die eine Mehrzahl miteinander zusammenwirkender Logikelemente (0104) umfasst, **dadurch gekennzeichnet, dass** für eine ausgewählte Programmstelle aus der Reihe sukzessiver, abzuarbeitender Konfigurationen bei einer Konfiguration mit einer Programmstelle, an welcher noch kein Auftreten eines Fehlers erwartet wird, mit der rekonfigurierbaren Architektur erzeugte Daten konfigurationsgemäß in einem Speicher (0102b) abgelegt werden, die algorithmisch relevante Zustandsdaten des Programmes aus der Reihe sukzessiver, abzuarbeitender Konfigurationen umfassen, und dann im Programm unter Rekonfigurierung wie erforderlich fortgeschritten wird, bis Zustandsdaten erfasst werden, anhand derer ein zu debuggender Fehler erkennbar ist.

2. Verfahren nach dem vorhergehenden Anspruch, worin die Speicher interne und/oder Arbeits-Speicher der dynamisch rekonfigurierbaren Architektur sind und Daten, insbesondere Zustandsdaten, in diesen abgelegt werden.

3. Verfahren nach einem der vorhergehenden Ansprüche, **dadurch gekennzeichnet, dass** bei der Rekonfigurierung zumindest die zur Analyse abgelegten Zustandsdaten wenigstens so lange unverändert bleiben, bis sie erfasst wurden.

4. Verfahren nach dem vorhergehenden Anspruch, **dadurch gekennzeichnet, dass** die Erfassung der relevanten Zustands- Daten durch Einkonfigurieren einer Konfiguration unter Erhalt der Zustandsdaten umfasst, dass nicht die nächste, bei normalem Programmablauf erforderliche Konfiguration geladen wird, sondern statt dessen eine Konfiguration, über welche die zu den Debuggingzwecken erforderlichen Daten in eine Debuggingeinheit (0301) übertragen werden, wobei nach Auslesen der Debugginginformation durch Umkonfigurierung mit der normalen Programmausführung fortgefahren wird.

5. Verfahren nach einem der vorhergehenden Ansprüche, **dadurch gekennzeichnet, dass** die Daten in einem externen Speicher abgelegt werden und insbesondere Zustände der rekonfigurierbaren Architektur nach Verknüpfung von Operanden betreffen.

6. Verfahren nach einem der vorhergehenden Ansprüche, **dadurch gekennzeichnet, dass** die Daten Zustandsdaten umfassen, die nach Abarbeitung einer Konfiguration nicht au-ßerhalb der rekonfigurierbaren Architektur und/oder nach Beendigung der aktuell abzuarbeitenden Konfiguration benötigt werden.

7. Verfahren nach einem der vorhergehenden Ansprüche, **dadurch gekennzeichnet, dass** mit ersten ausgelesenen Daten eine Simulation begonnen wird, indem ein Simulator auf Basis der aktuellen Daten und/oder Zustände aufgesetzt wird.

8. Verfahren nach einem der vorhergehenden Ansprüche, **dadurch gekennzeichnet, dass** nach Auslesen der Debugg-Information, insbesondere durch eine dedizierte Debug-Konfiguration, mit der normalen Programmausführung fortgefahren wird.

9. Verfahren nach einem der vorhergehenden Ansprüche, **dadurch gekennzeichnet, dass** eine aktuell abzuarbeitende Konfiguration zum Auslesen der Debug-Information derart terminiert wird, dass die für Debuggingzwecke erforderlichen Daten gültig in den entsprechenden Speicherstellen verbleiben, eine Konfiguration zur Übertragung der Debuggingzwecke nach außerhalb der rekonfigurierbaren Architektur einkonfiguriert wird, die zu Debuggingzwecken erforderlichen Daten aus der rekonfigurierbaren Architektur übertragen werden, und, ohne Veränderung der bei Terminierung der ersten Konfiguration unverändert belassenen Daten und/oder Zustandsdaten die Ausführung der vorherigen Konfiguration fortgesetzt wird.

## Claims

1. Process for efficient debugging of a program from a series of successive configurations to be processed on dynamically reconfigurable architecture, wherein the architecture is operated as a processor or co-processor which comprises a plurality of logic elements (0104) cooperating with one another, **characterised in that** for a selected program point from the series of successive configurations to be processed for a configuration with a program point, at which still no occurrence of an error is expected, data produced with the reconfigurable architecture are filed according to configuration in a memory (0102b) and comprise algorithmically relevant state data of the program from the series of successive configurations to be processed, and then an advance is made as required in the program with reconfiguration until state data are recorded, using which an error to be debugged can be recognised.

2. Process according to the preceding claim, wherein the memories are internal and/or working memories of the dynamically reconfigurable architecture and data, in particular state data, are filed in them.

3. Process according to one of the preceding claims, **characterised in that** when reconfiguring at least the state data filed for analysis remain unchanged at least until they have been recorded.

4. Process according to the preceding claim, **characterised in that** recording of the relevant state data by configuring-in comprises configuration while receiving the state data, **in that** the next configuration required during normal program sequence is not loaded, but instead a configuration, by means of which the data necessary for debugging purposes are transferred into a debugging unit (0301), wherein after reading-out the debugging information by reconfiguring, the normal program run is continued.

5. Process according to one of the preceding claims, **characterised in that** the data are filed in an external memory and relate in particular to states of the reconfigurable architecture after linking operands.

6. Process according to one of the preceding claims, **characterised in that** the data comprise state data, which, after processing a configuration, are not required outside of the reconfigurable architecture and/or after terminating the configuration currently to be processed.

7. Process according to one of the preceding claims, **characterised in that** with first data read-out, simulation is started by placing a simulator on the basis of current data and/or states.

8. Process according to one of the preceding claims, **characterised in that** after reading-out the debugging information, the normal program run is continued in particular by a dedicated debugging configuration.

9. Process according to one of the preceding claims, **characterised in that** a configuration currently to be processed for reading-out the debug information is terminated such that the data required for debugging purposes remain valid in the corresponding memory points, a configuration for transferring according to debugging purposes is configured in outside of the reconfigurable architecture, the data required for debugging purposes are transferred from the reconfigurable architecture, and, without changing the data and/or state data left unchanged when terminating the first configuration, the execution of the previous configuration is continued.

## Revendications

1. Procédé pour le débogage efficace d'un programme se composant d'une série de configurations successives à exécuter sur une architecture dynamiquement reconfigurable, l'architecture étant exploitée en tant que processeur ou que co-processeur, laquelle comprend une pluralité d'éléments logiques (0107) agissant de concert entre eux, **caractérisé en ce que**, pour un emplacement de programme sélectionné de la série de configurations successives à exécuter et dans le cas d'une configuration avec un emplacement de programme sur lequel aucune apparition d'un défaut n'est encore attendue, des données qui sont générées avec l'architecture reconfigurable et qui comprennent des données d'état du programme importantes du point de vue algorithmique et provenant de la série de configurations successives à exécuter sont mémorisées d'une manière conforme à la configuration dans une mémoire (0102b), et **en ce qu'**ensuite une progression a lieu dans le programme avec une reconfiguration telle qu'elle est nécessaire jusqu'à ce que des données d'état, sur la base desquelles un défaut à déboguer est détectable, soient saisies.

2. Procédé selon la revendication précédente dans lequel les mémoires sont des mémoires internes et/ou des mémoires de travail de l'architecture dynamiquement reconfigurable et dans lequel des données, en particulier des données d'états, sont mémorisées dans celles-ci.

3. Procédé selon l'une quelconque des revendications précédentes, **caractérisé en ce que**, lors de la reconfiguration, pour le moins les données d'état mémorisées pour l'analyse restent inchangées au moins jusqu'à ce qu'elles aient été saisies.

4. Procédé selon la revendication précédente, **caractérisé en ce que** la saisie des données d'état importantes comprend une intégration d'une configuration tout en conservant les données d'état et **en ce que** ce n'est pas la configuration suivante, laquelle est nécessaire dans le cas d'un déroulement normal du programme, qui est chargée, mais à la place de celle-ci une configuration par l'intermédiaire de laquelle les données nécessaires à des fins de débogage sont transmises dans une unité de débogage (0301), alors qu'après la lecture de l'information de débogage la poursuite normale du programme a lieu à l'aide d'une reconfiguration.

5. Procédé selon l'une quelconque des revendications précédentes, **caractérisé en ce que** les données sont mémorisées dans une mémoire externe et concernent en particulier des états de l'architecture reconfigurable après un enchaînement d'opérateurs.

6. Procédé selon l'une quelconque des revendications précédentes, **caractérisé en ce que** les données comprennent des données d'état qui, après l'exécution d'une configuration, ne sont pas nécessaires en dehors de l'architecture reconfigurable et/ou après l'achèvement de la configuration à exécuter actuellement.

7. Procédé selon l'une quelconque des revendications précédentes, **caractérisé en ce qu'**avec des premières données lues a lieu le début d'une simulation par le fait qu'un simulateur est mis en place sur la base des données et/ou des états actuels.

8. Procédé selon l'une quelconque des revendications précédentes, **caractérisé en ce que** l'exécution normale du programme se poursuit après la lecture de l'information de débogage, en particulier au moyen d'une configuration de débogage dédiée.

9. Procédé selon l'une quelconque des revendications précédentes, **caractérisé en ce qu'**une configuration à exécuter actuellement pour la lecture de l'information de débogage est terminée ou finie de telle façon que les données nécessaires à des fins de débogage restent dans les emplacements de mémoires correspondants tout en conservant leur validité, **en ce qu'**une configuration pour la transmission des objets de débogage est intégrée dans la configuration vers l'extérieur de l'architecture reconfigurable, **en ce que** les données nécessaires à des fins de débogage sont transmises à partir de l'architecture reconfigurable et **en ce que** l'exécution de la configuration précédente se poursuit sans modification des données et/ou des données d'état laissées inchangées lors de la fin de la première configuration.
